# EUROPÄISCHE PATENTANMELDUNG

(11) **EP 4 338 575 A1**
(43) Veröffentlichungstag der Anmeldung: **20.03.2024**
(21) Anmeldenummer: 23190984.7
(22) Anmeldetag: 11.08.2023
(51) Int. Cl.: A01D 89/00, A01F 15/10, A01D 80/02

(54) **LANDWIRTSCHAFTLICHE ERNTEMASCHINE**

(30) Priorität: 14.09.2022 DE 202022105171 U
(71) Anmelder: Pöttinger Landtechnik GmbH, 4710 Grieskirchen (AT)
(72) Erfinder: Freimüller, Paul, 4710 Grieskirchen (AT); Weissenböck, Thomas, 4710 Grieskirchen (AT)
(74) Vertreter: Thoma, Michael

(57) **Zusammenfassung**

Die Erfindung betrifft eine landwirtschaftliche Erntemaschine, insbesondere in Form eines Ladewagens oder einer Ballenpresse, mit einem Aufnahmeförderer zum Aufnahmen von Erntegut vom Boden umfassend einen Stachelrotor, der umlaufend antreibbare Förderzinken aufweist, einem Anschlussförderer, an den der Aufnahmeförderer das vom Boden aufgenommene Erntegut übergibt, sowie einer über dem Stachelrotor angeordneten Förderhilfe zum Unterstützen der Erntegutübergabe von dem Stachelrotor an den Anschlussförderer, wobei die genannte Förderhilfe eine Prallfläche umfasst, die ein Zinkengitter mit einer Vielzahl von Zinken aufweist, die an einem sich quer über den Erntegutförderstrom erstreckenden Zinkenträger befestigt sind, von dem die Zinken auskragen, wobei die Zinken ein Befestigungsmaul aufweisen, dass den Zinkenträger zumindest auf drei Seiten umgreift und durch Spannmittel, die sich quer zur Zinkenlängsachse erstrecken, auf dem Zinkenträger festgeklemmt und/oder -gehalten ist.

## Beschreibung

Die vorliegende Erfindung betrifft eine landwirtschaftliche Erntemaschine, insbesondere in Form eines Ladewagens oder einer Ballenpresse, mit einem Aufnahmeförderer zum Aufnehmen von Erntegut vom Boden umfassend einen Stachelrotor, der umlaufend antreibbare Förderzinken aufweist, einen Anschlussförderer, an den der Aufnahmeförderer das vom Boden aufgenommene Erntegut übergibt, sowie einer über dem Stachelrotor angeordneten Förderhilfe zum Unterstützen der Erntegutübergabe von dem Stachelrotor an den Anschlussförderer, wobei die genannte Förderhilfe eine Prallfläche umfasst, die ein Zinkengitter mit einer Vielzahl von Zinken aufweist, die an einem sich quer über den Erntegutförderstrom erstreckenden Zinkenträger befestigt sind, von dem die genannten Zinken auskragen.

Bei landwirtschaftlichen Erntemaschinen wie Ladewagen oder Ballenpressen, aber auch Mergern bzw. Bandschwadern ist es bekannt, geschnittenes Erntegut wie Heu und Gras mittels einer rotierenden Stachelwalze vom Boden aufzunehmen, die bisweilen auch als Pickup bezeichnet wird. Solche Stachelwalzen erstrecken sich regelmäßig liegend quer zur Fahrtrichtung und besitzen eine Vielzahl von Förderzinken, die entlang einer Umlaufbahn gesteuert oder ungesteuert angetrieben werden. Die genannten Umlaufbahnen der Förderzinken erstrecken sich dabei regelmäßig aufrecht etwa fahrtrichtungsparallel, wobei die Förderzinken bei ungesteuerter Ausbildung entlang einer Kreisbahn um eine fixe Drehachse rotieren können und bei gesteuerter Ausbildung zusätzlich zur Umlaufbewegung verkippen und/oder ein- und ausfahren können, wobei die genannte Umlaufbahn oft von der Kreisform abweichen und eine Steuerbewegung entlang der Umlaufbahn durch eine Kurvensteuerfläche beispielsweise in Form einer Führungskulisse oder durch Kurbelsteuerhebel erfolgen kann.

Um das von den Förderzinken aufgenommene Erntegut von den genannten Förderzinken wieder abstreifen zu können, sind zwischen den Förderzinken Abstreifer vorgesehen, die zumeist in Form von streifenförmigen Abstreiferblechen ausgebildet sind und zwischen sich spaltförmige Aussparungen begrenzen, in denen die Förderzinken angeordnet sind und mehr oder weniger weit über die Abstreiferbleche hinaus ausfahren bzw. sich dazwischen zurückziehen können. Anstelle starrer, fester Abstreifer können zwischen den Zinken zumindest abschnittsweise auch umlaufende Förderbänder vorgesehen werden, vgl. DE 102017 001 012 A1. Die Abstreiferbleche können auch partiell im Abstreifbereich durch umlaufende Förderpaddel ersetzt werden, vgl. DE 20 2017 000 595 U1.

Um den Gutstrom im Bereich der Pickup zu verbessern und die Übergabe an den nachfolgenden Anschlussförderer zu vergleichmäßigen und sicherzustellen, ist es bekannt, zumindest teilweise oberhalb der Pickup eine Förderhilfe anzuordnen, sodass zwischen Pickup und Förderhilfe ein definierter Durchgangs- bzw. Förderkanal für das Erntegut gebildet wird. Eine solche Förderhilfe kann insbesondere ein Prallblech umfassen, das sich zumindest näherungsweise bogenförmig über die Umlaufbahn der Förderzinken der Pickup oder spitzwinklig hierzu geneigt erstreckt, um das Erntegut zu dem Anschlussförderer hinzuleiten. Zusätzlich zu einem solchen richtungsgebenden Prallblech kann die Förderhilfe auch eine Schwadrolle oder Einlaufwalze umfassen, vgl. beispielsweise EP 31 35 099 A1, die an der Einlaufkante des Prallblechs angebracht werden kann, um ein Hängenbleiben des Ernteguts an der Einlaufkante des Prallblechs zu verhindern.

Mittels einer solchen Förderhilfe über der Pickup wird insbesondere dem Problem vorgebeugt, dass bei höheren Geschwindigkeiten des Stachelrotors der Pickup trockenes Erntegut wie beispielsweise getrocknetes Heu oder Stroh nicht der Umlaufbahn der Förderzinken der Pickup folgt, sondern von den Förderzinken nach oben abgeworfen wird, sodass das Erntegut nicht an den Anschlussförderer übergeben wird. Durch das wieder zurückfallende und dann wieder aufgenommene Erntegut kommt es zu einer ungleichmäßigen, pulsierenden Futteraufnahme, was zu Verstopfungen oder Überbelastungen im Bereich des Anschlussförderers führen kann.

Bei Ladewagen oder Ballenpressen kann der genannte Anschlussförderer insbesondere ein Förderrotor sein, dem ein Schneidwerk zugeordnet sein kann, um das Erntegut auf die gewünschte Länge zu zerschneiden. Bei ungleichmäßiger Beschickung kann es zu einer Beeinträchtigung des Schnittvorgangs bzw. einer Überbelastung des Schneidwerks und des Förderrotors kommen. Bei Mergern oder Bandschwadern kann der Anschlussförderer ein Querförderband sein, sodass es bei ungleichmäßiger Beschickung zu einem ungleichmäßigen Schwad kommt.

Ungleichmäßigkeiten kann es aber auch schon bei der Aufnahme des Ernteguts vom Boden geben, beispielsweise weil der Bewuchs nicht gleichmäßig war oder beim Zetten bzw. Schwaden kein gleichmäßig dicker Erntegutteppich erzeugt worden ist. Um die Wirkung der genannten Förderhilfe auch bei ungleichmäßigem, dicker oder dünner werdendem Aufnahmestrom sicherzustellen, wird die Förderhilfe üblicherweise höhenbeweglich aufgehängt, sodass sich die Höhe des Durchtrittsspalts zwischen Stachelwalze und Prallblech bzw. Einlaufwalze an die Dicke des aufzunehmenden Erntegutstroms anpassen kann. Hierzu wird die Förderhilfe über der Pickup üblicherweise an schwenkbaren Tragarmen aufgehängt, die am Maschinenrahmen stromab der Pickup um eine liegende Schwenkachse quer zur Fahrtrichtung schwenkbar angelenkt sind, sodass die vorderen Enden der Tragarme mit den daran befestigten Prallblechen, Schwadrollen, Haspeln und dergleichen auf- und abwippen können.

Um den aufzunehmenden Erntegutteppich auch dann sicher führen bzw. mit der Pickup in Eingriff halten zu können, wenn der Erntegutteppich in seiner Dicke über die Breite der Pickup variiert, also beispielsweise am rechten Rand dicker ist als am linken Rand, kann die Förderhilfe auch um eine liegende, zumindest näherungsweise in Fahrtrichtung weisende Kippachse verkippbar aufgehängt sein, vgl. EP 29 41 946 B1 oder auch die Schrift EP 3 669 638 A1.

Auch wenn die Prallbleche beweglich aufgehängt sein können, wirken bisweilen signifikante Kräfte auf die Zinken des Prallblechs. Da die genannten Zinken üblicherweise von einem Zinkenträger auskragen und insofern nur am Zinkenträger bzw. einseitig befestigt sind, ergeben sich einerseits Biegebelastungen in den Zinken selbst und andererseits Lagerreaktions- und Torsionskräfte im Bereich der Zinkenbefestigung am Zinkenträger.

Bislang kommen angesichts der Belastungen an den Prallblechen üblicherweise gebogene Rundstäbe aus Metall als Prallblechzinken zum Einsatz, die jedoch verschiedene Nachteile mit sich bringen. Einerseits können sich die Stäbe nicht an den Gutfluss bei großen Futtermengen anpassen, da sie relativ steif sind. Die Zinkensteifigkeit bei Rundstäben paßt dabei auch über deren Längen nicht, da die Rundstäbe insbesondere zum auskragenden Ende hin deutlich zu steif sind, obwohl dort die Biegebelastungen durch den immer kürzer werdenden Hebelarm kleiner werden.

Andererseits verformen sich die Rundstäbe bei Überlast plastisch und die Klemmverbindung am Zinkenträger lockert sich. Die bisherigen Rundstahlzinken werden üblicherweise in Bohrungen in dem Querträger eingesteckt und dann von einer Seite her durch einen L-förmigen Klemmflansch festgeklemmt, der den Zinken quer zu seiner Längsrichtung verspannt bzw. gegen die Kontur der Bohrung im Querträger spannt und dabei am Zinkenabschnitt sitzt, der aus dem Steckloch herausschaut. Bei plastischen Verformungen lockert sich diese Klemmung.

Anstelle die Zinken des Prallblechs in Stecklöcher am Zinkenträger einzustecken, wurde auch bereits angedacht, am Befestigungsende der Zinken eine Befestigungsschelle vorzusehen, die den rohrförmigen Zinkenträger umschließt, und die Befestigungsschelle mittels einer Schraube zu fixieren, die durch die Befestigungsschelle hindurch in den Wurzelbereich der Zinke eingeschraubt wird. Dies erfordert jedoch im Wurzelbereich des Zinkens ein Schraubgewinde, was per se die Fertigung der Zinken aufwändig macht, und zudem im Wurzelbereich eine vergrößerte Zinkendicke erfordert, um ausreichend Fleisch um das Gewinde herum zu haben, wodurch die Gestaltungsfreiheit hinsichtlich des Zinkenquerschnitts deutlich behindert wird.

Gleichzeitig erschweren solche Befestigungsschellen mit Fixierschrauben den Austausch beschädigter Zinken, insbesondere wenn vor dem Prallblech eine Einlauf- oder Schwadrolle gefahren wird, die den Zugang zur Befestigungsschraube behindert bzw. mit der zu entfernenden Befestigungsschraube kollidiert und insofern in einem zusätzlichen Schritt demontiert und wieder montiert werden muss, wenn ein Prallblech-Zinken getauscht werden soll.

Der vorliegenden Erfindung liegt daher die Aufgabe zugrunde, eine verbesserte landwirtschaftliche Erntemaschine der eingangs genannten Art zu schaffen, die Nachteile des Standes der Technik vermeidet und letzteren in vorteilhafter Weise weiterbildet. Insbesondere soll ein verbesserte Förderhilfe mit einem verbesserten Prallblech geschaffen werden, das sich an verschiedene Futtermengen und Erntegutströme gut anpassen und in sich elastisch verwinden kann, gleichzeitig aber ausreichend stabil ist und plastische Verformungen vermeidet, sowie ein einfaches Ersetzen beschädigter Zinken gestattet.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also vorgeschlagen, die Zinken der Prallbleche auf der Außenseite des Zinkenträgers zu befestigen und hierfür Befestigungsmittel quer zur Längsrichtung bzw. -achse der Zinken zu verwenden, um die Haltekräfte besser zu verteilen und den Zinkenfuß ohne Rücksicht auf die Befestigungsmittel frei gestalten zu können. Erfindungsgemäß weisen die Zinken ein Befestigungsmaul auf, das den Zinkenträger zumindest auf drei Seiten umgreift und durch Spannmittel, die sich quer zur Zinkenlängsachse erstrecken, an dem Zinkenträger festgeklemmt und/oder -gehalten sind.

Durch die Spannmittel quer zur Zinkenlängsachse kann nicht nur eine bessere Verteilung der Haltekräfte erzielt werden, sondern es wird ein möglicherweise erforderlicher Austausch der Zinken deutlich erleichtert, da die Montage- bzw. Befestigungsrichtung der Spannmittel nicht mit einer möglicherweise vor dem Prallblech verwendeten Schwadrolle kollidiert. Gleichzeitig wird auch im Fußbereich der Zinken kein Schraubgewinde oder andere Befestigungskonturen wie Rasttaschen oder dergleichen benötigt, so dass der Zinkenfuß, d.h. der Zinkenabschnitt unmittelbar an den Zinkenträger angrenzend, mit großer Designfreiheit gestaltet werden kann, um die gewünschte Flexibilität bzw. Biegecharakteristik und Steifigkeit zu erzielen.

Insbesondere können die sich quer zur Zinkenlängsrichtung erstreckenden Spannmittel zwei gegenüberliegende Befestigungsschenkel des jeweiligen Zinkens auf gegenüberliegende Seiten des Zinkenträgers festklemmen und/oder den Zinkenträger zwischen den gegenüberliegenden Befestigungsschenkeln einklemmen.

Um auf der Vorderseite des Zinkenträgers, die - bei Vorhandensein einer Spannrolle - der Spannrolle zugewandt sind, ist, keinen Überstand zu haben bzw. Platz zu sparen, können sich die genannten Spannmittel in vorteilhafterweise durch den Zinkenträger hindurch erstrecken, so dass die Befestigungsschenkel des Befestigungsmauls nicht über die Vorderseite des Zinkenträgers vorstehen müssen und/oder eine Tiefe des Aufnahmemauls kleiner oder gleich der Querschnittserstreckung des Zinkenträgers in Richtung der Zinkenlängsachse sein kann.

Mit anderen Worten können die gegenüberliegenden Befestigungsschenkel des Befestigungsmauls bündig an der Vorderseite des Zinkenträgers enden oder gegenüber der genannten Zinkenträgervorderseite ein Stück weit zurückgesetzt sein, so dass die Zinkenträgervorderseite gleichzeitig die Vorderseite des Prallblechs bzw. dessen vorderste Kontur definieren kann. Hierdurch behindert die außenseitige Befestigung der Zinken am Zinkenträger nicht die Anordnung einer Schwadrolle auf der Zinkenträgervorderseite. Insbesondere ergeben sich im Bereich der Prallblechvorderseite auch keine Vorsprünge, an denen sich das Futter verheddern könnte.

Vorteilhafterweise kann die Vorderseite des Prallblechs glatt ausgebildet und/oder von der Vorderseite des Zinkenträgers ohne überstehende Befestigungsmittel gebildet sein.

In Weiterbildung der Erfindung kann das Befestigungsmaul in gegenüberliegenden Befestigungsschenkeln Durchgangslöcher aufweisen, die mit einem Durchgangsloch durch den Zinkenträger hindurch fluchten. Das Spannmittel beispielsweise in Form eines Schraubbolzens kann durch die fluchtenden Durchgangslöcher hindurchgesteckt sein und die gegenüberliegenden Befestigungsschenkel auf den Zinkenträger spannen. Gleichzeitig wird durch die Durchgangslöcher und das hindurchgesteckte Spannmittel auch eine formschlüssige Sicherung erzielt, so dass die Spannmittel die Zinken des Prallblechs sowohl formschlüssig als auch kraftschlüssig auf dem Zinkenträger halten können.

In vorteilhafter Weiterbildung der Erfindung kann zwischen dem Befestigungsmaul eines jeweiligen Zinkens und dem Zinkenträger auch eine formschlüssige Verrastung vorgesehen sein, um den jeweiligen Zinken auch ohne Spannmittel am Zinkenträger zu sichern. Insbesondere können die Rastmittel dazu konfiguriert sein, das Befestigungsmaul in der bestimmungsgemäßen Montageposition auf dem Zinkenträger zu halten, in welcher Montageposition die Spannmittel eingesetzt bzw. montiert und festgezogen werden können.

Insbesondere können das Befestigungsmaul und der Zinkenträger aufeinander formpassend abgestimmte Rastvorsprünge und -ausnehmungen zum Verrasten des Befestigungsmauls auf dem Zinkenträger aufweisen. Beispielsweise können an gegenüberliegenden Schenkeln des Befestigungsmauls nach innen, zum Zinkenträger hin vorstehende Rastvorsprünge vorgesehen sein, die in Rastausnehmungen am Zinkenträger einrasten können, wenn der Zinken mit dem Befestigungsmaul auf dem Zinkenträger aufgeschoben wird. Dabei kann sich das Befestigungsmaul elastisch verformen, so dass die Rastvorsprünge über die Kontur des Zinkenträgers hinweggleiten können, wobei das Befestigungsmaul dann wieder elastisch zurückfedert bzw. -schnappt, sobald die Rastvorsprünge mit den Rastausnehmungen fluchten bzw. darin eingreifen.

Alternativ oder zusätzlich können aber auch am Befestigungsmaul, beispielsweise dessen gegenüberliegenden Befestigungsschenkeln, eine oder mehrere Rastausnehmungen vorgesehen sein, in die ein oder mehrere am Zinkenträger vorgesehene Rastvorsprünge eingreifen können.

Insbesondere können die Rastvorsprünge und -ausnehmungen mit den zuvor genannten Durchgangsausnehmungen für das Spannmittel kombiniert bzw. darin integriert oder darin vorgesehen sein. Beispielsweise können um die Durchgangsausnehmungen herum vorstehende, ringförmige Raststege vorspringen, die in die dazu fluchtende Durchgangsausnehmung einrasten können, wenn das Befestigungsmaul seine Montageposition auf dem Zinkenträger erreicht hat. Die genannten, ringförmigen Raststege können beispielsweise innenseitig an den Befestigungsschenkeln des Befestigungsmauls vorstehen, um in die Durchgangsausnehmung des Zinkenträgers einzurasten, wobei allerdings auch eine umgekehrte Anordnung vorgesehen sein kann, gemäß der ringförmige Raststege um die Durchgangsausnehmung des Zinkenträgers herum vorgesehen sein und außenseitig vom Zinkenträger vorstehen können, um in die Durchgangslöcher in den Befestigungsschenkeln einzurasten, wenn das Befestigungsmaul seine aufgesteckte Montageposition erreicht.

Das Befestigungsmaul und/oder zumindest einer seiner Befestigungsschenkel kann in Weiterbildung der Erfindung elastisch nachgiebig ausgebildet sein, um die genannte Verrastung mit dem Zinkenträger zu gestatten.

Das genannte Durchgangsloch im Befestigungsmaul und/oder das Durchgangsloch im Zinkenträger kann eine von der Kreisform abweichende Querschnittsform besitzen, um die Spannmittel gegen Verdrehen zu sichern. Beispielsweise kann das Durchgangsloch ein Mehrkantprofil aufweisen, in dem das Spannmittel, beispielsweise am Schraubbolzenkopf mit einem dazu passend geformten Mehrkantprofil verdrehgesichert eingreifen kann.

Die Spannmittel können insbesondere Schraubbolzen bilden, die durch das Befestigungsmaul und den Zinkenträger hindurchgesteckt sein und mittels einer Mutter auf dem durchgestreckten Bolzenteil gesichert und gespannt werden können.

Der Zinkenträger kann grundsätzlich verschiedene Querschnittsformen bzw. Außenkonturen besitzen. Beispielsweise kann als Zinkenträger ein einfaches Kreisprofilrohr verwendet werden, wobei in diesem Fall das Befestigungsmaul der Zinken vorteilhafterweise als halbmondförmig bzw. halbzylindrische Schale konturiert sein kann.

Insbesondere kann der Zinkenträger aber auch eine von der Kreisform abweichende Querschnittsform besitzen, beispielweise ein Mehrkantprofil bilden, um die am Zinkenträger befestigten Zinken besser gegen Verdrehen um die Zinkenträgerlängsachse sichern bzw. Torsionsbelastungen besser abtragen zu können.

Es können aber auch Formrohre mit Mischprofilen Verwendung finden. Beispielsweise kann der Zinkenträger eine abgerundete Querschnittskontur mit gegenüberliegenden Abflachungen besitzen, wobei das Befestigungsmaul auf den gegenüberliegenden Abflachungen festgespannt sein kann.

Vorteilhafterweise besitzt das Befestigungsmaul eine an die Querschnittskontur des Zinkenträgers angepasste Konturierung. Besitzt der Zinkenträger beispielsweise die genannten, gegenüberliegenden Abflachungen kann das Befestigungsmaul zwei gegenüberliegende, flache oder ebene Befestigungsschenkel aufweisen, die auf die genannten Abflachungen flächig festgespannt sein können.

Ist der Zinkenträger als Mehrkantprofil, beispielsweise Vierkantprofil ausgebildet, kann das Befestigungsmaul innenseitig ebenfalls ein Mehrkantprofil, beispielsweise in Form eines eckigen U-Profils aufweisen.

Die Befestigungsmäuler können in Weiterbildung der Erfindung integral einstückig, materialhomogen an die Zinken angeformt sein, wodurch ein günstiger Kraftfluss aus dem Zinken in die Befestigungsmäuler hinein erzielt werden kann und gleichzeitig separate Montageschritte vermieden werden können. Alternativ wäre es grundsätzlich aber auch möglich, die Befestigungsmäuler und Zinken zunächst separat voneinander auszubilden und in geeigneter Weise starr miteinander zu verbinden, beispielsweise miteinander zu verschweißen und/oder zu verkleben. Ein einstückiges, material- und strukturhomogenes Anformen der Befestigungsmäuler an die Zinken ist jedoch hinsichtlich der vorgenannten Aspekte vorteilhaft.

In Weiterbildung der Erfindung bestehen die Zinken einschließlich der Befestigungsmäuler aus Kunststoff. Im Vergleich zu Rundstahlzinken können sich Kunststoffzinken besser der Futtermenge anpassen, wodurch der Gutfluss optimiert werden kann. Insbesondere kann durch Wahl eines geeigneten Kunststoffs die Steifigkeit bzw. Nachgiebigkeit der Zinken in der gewünschten Weise angepasst werden.

Zumindest können die Zinken und/oder die Befestigungsmäuler zum überwiegenden Teil aus Kunststoff bestehen, wobei insbesondere der gesamte Grundkorpus des länglichen Zinkens und der Grundkorpus des Befestigungsmauls aus Kunststoff bestehen können. In diesen Grundkorpus aus Kunststoff können Einsätze aus anderen Material, beispielsweise Stahlbuchsen für die Spannmittel bzw. Befestigungsschrauben eingesetzt sein. Gegebenenfalls ist es auch möglich, die dem Futtergutstrom zugewandte Zinkenkante durch eine Armierung nach Art der Stahlkante eines Skis zu verstärken.

In Weiterbildung der Erfindung können die Zinken einschließlich des Befestigungsmauls aber auch vollständig aus Kunststoff bestehen, beispielsweise aus Kunststoffspritz gegossen sein.

In vorteilhafter Weiterbildung der Erfindung können die Zinken einen sich über ihre Länge verändernden Querschnitt besitzen, wobei sich über die Länge betrachtet die Querschnittsform und/oder die Querschnittsfläche verändern kann.

Insbesondere können sich die Zinken zu den auskragenden Enden hin verjüngen, wobei sich die Zinken in der Breite und/oder in der Höhe zum auskragenden Ende hin verjüngen können.

Insbesondere können die Zinken derart konturiert sein, dass die Biegesteifigkeit der Zinken zum Befestigungsmaul hin größer und/oder zum auskragenden Ende hin kleiner wird. Insbesondere kann das Flächenträgheitsmoment bezüglich einer Biegeachse, die senkrecht zur Längsachse der Zinken und senkrecht zur Längsachse der Spannmittel steht, vom Befestigungsmaul hin zum auskragenden Ende hin abnehmen.

Die Zinken können auch hinsichtlich ihrer Querschnittsform über die Länge unterschiedlich konturiert sein. Beispielsweise kann zum Zinkenende hin ein rechteckiger und/oder mehreckiger und/oder abgerundeter Zinkenquerschnitt vorgesehen sein, während der Zinken zum Befestigungsmaul hin einen T-förmigen oder Doppel-T-förmigen Querschnitt aufweisen kann. Insbesondere kann ein Doppel-T-förmiger Querschnitt vorgesehen sein, dessen zentraler Schenkel sich im Wesentlichen parallel zur Längsachse der Spannmittel und/oder im Wesentlichen aufrecht erstreckt und dessen obere und untere Querschenkel sich im Wesentlichen senkrecht zur Längsachse des Spannmittels und/oder liegend erstrecken.

Ein solches Doppel-T-förmiges Querschnittsprofil kann sich zumindest über das erste Drittel oder die erste Hälfte der Zinkenlänge, jeweils ausgehend vom Befestigungsmaul, erstrecken, wobei sich das Doppel-T-förmige Querschnittsprofil auch über etwa zwei Drittel der Länge des Zinkens vom Befestigungsmaul ausgehend erstrecken kann.

Unabhängig von der Länge des Doppel-T-förmig konturierten Zinkenabschnitts kann sich die Querschnittsabmessung des Doppel-T-förmig konturierten Zinkenabschnitts vom Befestigungsmaul ausgehend zur Zinkenspitze hin verjüngen. Insbesondere kann sich die Höhe des zentralen Mittelstegs des Querschnittsprofils vom Befestigungsmaul zur Zinkenspitze hin verjüngen. Alternativ oder zusätzlich können sich die Querstege in ihrer Breite vom Befestigungsmaul zu den Zinkenspitzen hin verjüngen.

In vorteilhafter Weiterbildung der Erfindung können die Zinken eine zumindest abschnittsweise bogenförmig konturierte Längsachse und/oder eine bogenförmig konturierte Unterseite aufweisen, die dem Aufnahme- und/oder Anschlussförderer zugewandt ist, um sich an den Fördergutstrom anschmieden zu können, der um die Stachelwalze des Aufnahmeförderers herum leicht bogenförmig verläuft.

Die Erfindung wird nachfolgend anhand eines bevorzugten Ausführungsbeispiels und zugehörigen Zeichnungen näher erläutert. In den Zeichnungen zeigen:
- Fig. 1:: eine Seitenansicht der Pickup einer Erntemaschine und der dieser zugeordneten Förderhilfe umfassend eine Einlaufwalze und ein Prallblech mit einem Zinkengitter, die höhenbeweglich über der Stachelwalze der Pickup aufgehängt sind,
- Fig. 2:: eine perspektivische Darstellung der Förderhilfe, die deren Einlauf- bzw. Schwadwalze und das sich anschließende Prallblech schräg von oben zeigen, das an einem sich quer erstreckenden Zinkenträger befestigte Zinken aufweist,
- Fig. 3:: eine perspektivische Darstellung der Förderhilfe mit Prallblech und Schwadwalze schräg von unten,
- Fig. 4:: eine perspektivische Darstellung der Befestigung eines Zinkens des Prallblechs an den Zinkenträger, wobei das den Zinkenträger umgreifende Befestigungsmaul zu sehen ist,
- Fig. 5:: eine Draufsicht auf die Förderhilfe mit Prallblech und Schwadrolle aus den vorhergehenden Figuren,
- Fig. 6:: eine Schnittansicht durch das Prallblech im Bereich eines Zinkens entlang der Linie F-F in Fig. 5, die das Umgreifen des Zinkenträgers durch das Befestigungsmaul und das sich quer erstreckende Spannmittel in Form eines Schraubbolzens zeigt,
- Fig. 7:: eine perspektivische Ansicht eines Zinkens mit Befestigungsmaul aus dem Prallblech der vorhergehenden Figuren,
- Fig. 8:: eine Seitenansicht des Zinkens aus Fig. 7, die dessen Verjüngung in der Hülle zur auskragenden Zinkenspitze hin zeigt, und
- Fig. 9:: eine Draufsicht auf den Zinken aus den Fig. 7 und 8, die dessen Verschmälerung in der Breite zur auskragenden Zinkenspitze hin zeigt.

Die in den Figuren gezeigte Erntemaschine 1 kann zum Anbau an einen nicht dargestellten Schlepper ausgebildet sein und hierfür beispielsweise einen Anbaubock umfassen, der mittels einer Dreipunktanlenkung am Schlepper befestigbar ist, oder eine Deichsel aufweisen, um die Erntemaschine als Aufsattelgerät ausbilden und an den Schlepper anhängen zu können. Insbesondere kann die genannte Erntemaschine 1 in Form eines Ladewagens oder einer Ballenpresse, gegebenenfalls aber auch als Bandschwader bzw. Merger ausgebildet sein.

Wie die Figuren zeigen, kann die Erntemaschine 1 einen Maschinenrahmen 3 umfassen, der über ein nicht näher gezeigtes Fahrwerk am Boden abgestützt sein kann, gegebenenfalls je nach Ausbildung aber auch über einen Anbaubock schwebend vom Schlepper gehalten sein kann.

Der genannte Maschinenrahmen 3 trägt dabei einen Aufnahmeförderer 4, der Erntegut vom Boden aufsammelt und an einen Anschlussförderer 5 übergibt, der beispielsweise ein mit einem Schneidwerk versehener Förderrotor sein kann, um das aufgenommene Erntegut in eine Ballenformkammer oder den Speicherraum eines Ladewagens zu fördern.

Der genannte Aufnahmeförderer 4 kann einen Stachelrotor 7 aufweisen, der liegend angeordnet ist und sich mit seiner Umlaufachse 9 querliegend zur Fahrtrichtung erstrecken kann. Die Förderzinken 8 des Stachelrotors 7 können dabei ungesteuert um die genannte Umlaufachse 9 auf einer Kreisbahn umlaufen oder auch gesteuert auf einer gegebenenfalls nicht kreisförmigen Umlaufbahn um die genannte Umlaufachse 9 herum umlaufen.

Zwischen den Förderzinken 8 kann der Stachelrotor 7 Abstreiferleisten 10 aufweisen, die sich bogenförmig um die Umlaufachse 9 herum erstrecken und zwischen denen die Förderzinken 8 heraus vorspringen.

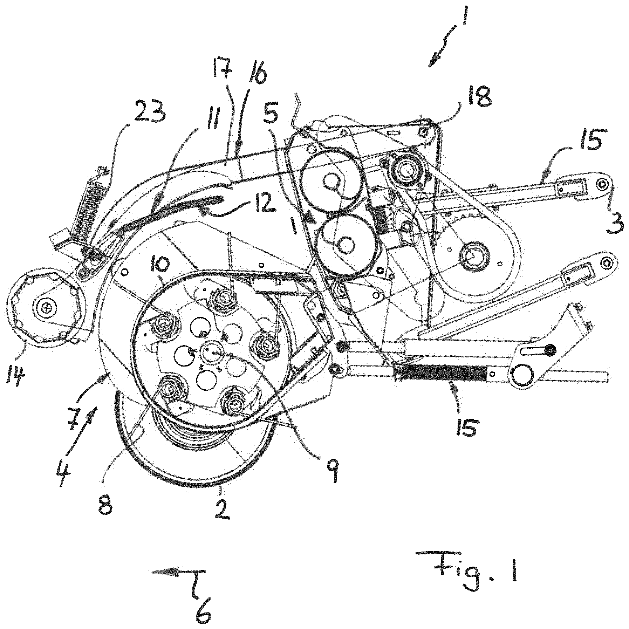

Der Stachelrotor 7 ist über eine Pickup-Aufhängung 15 am Maschinenrahmen 3 aufgehängt, sodass der Stachelrotor 7 Auf- und Abbewegungen ausführen kann und darüber hinaus auch um eine liegende, näherungsweise fahrtrichtungsparallele Achse verkippen kann. Die Pickup-Aufhängung 15 kann hierfür mehrere Aufhängungslenker umfassen, vgl. Figur 1 und/oder auch eine kugelgelenksartige Abstützung der Pickup in einem Mittelabschnitt vorsehen, wie dies per se an sich bekannt ist.

Wie Fig. 1 zeigt, kann der Stachelrotor 7 dabei durch ein Tastfahrwerk 2 am Boden abgestützt sein, um der Bodenkontur möglichst präzise folgen zu können. Ein solches Tastfahrwerk 2 kann beispielsweise 2 Tasträder umfassen, die rechts und links seitlich neben der Stachelwalze 7 am Boden laufen und den Stachelrotor über den Boden führen. Gegebenenfalls kann aber auch eine schwebende, beispielsweise sensorgesteuerte Aufhängung vorgesehen sein.

Wie die Figuren verdeutlichen, ist oberhalb des Stachelrotors 7 eine Förderhilfe 11 vorgesehen, die eine sich um den Umfang des Stachelrotors 7 schmiegende bzw. spitzwinklig zur Radialrichtung vom Stachelrotor 7 angeordnete Prallfläche 12 aufweist, um vom Stachelrotor 7 nach oben geworfenes Erntegut nach hinten zum Anschlussförderer 5 hin zu leiten. Die genannte Prallfläche 12 kann in verschiedener Weise ausgebildet sein, beispielsweise ein Prallblech oder ein von einem Aufspanngerüst aufgespanntes Pralltuch aufweisen. Alternativ oder zusätzlich ist die Prallfläche 12 zumindest abschnittsweise auch von einem Stabgitter 13 gebildet, wie dies die Figuren zeigen.

Betrachtet man entsprechend Figur 1 die genannte Prallfläche 12 in Richtung der Umlaufachse 9 des Stachelrotors 7, erstreckt sich die genannte Prallfläche 12 in einem Segment von etwa 9 Uhr bis 12 Uhr bzw. 10 Uhr bis 1 Uhr oder 10 Uhr bis 12 Uhr bzw. in einem Quadranten, der in Fahrtrichtung vorne und oberhalb des Stachelrotors 7 liegt.

Vorteilhafterweise kann die genannte Prallfläche 12 auf ihrer im Stachelrotor 7 zugewandten Seite konkav, näherungsweise leicht rinnenförmig gewölbt sein, wobei grundsätzlich aber auch eine ebene Ausbildung in Betracht kommt.

Vorteilhafterweise erstreckt sich die genannte Prallfläche 12 zur Vertikalen spitzwinklig geneigt, beispielsweise unter einem Winkel von etwa 30° bis 60° geneigt.

An ihren vorderen bzw. unteren Randabschnitt kann an die Prallfläche 12 eine Einlaufwalze 14 anschließen, die einen Teil der Förderhilfe 11 bildet und ein sanftes Einlaufen des Ernteguts unter die Prallfläche 12 ermöglicht. Die genannte Einlaufwalze 14 kann sich liegend quer zur Fahrtrichtung erstrecken und um eine Drehachse drehbar sein, wobei die genannte Einlaufwalze 14 ohne Antrieb frei drehbar sein kann, gegebenenfalls aber auch aktiv angetrieben werden kann. Die genannte Einlaufwalze 14 ist zusammen mit der Prallfläche 12 beweglich aufgehängt, wie dies im Folgenden erläutert wird.

Die Förderhilfe-Aufhängung 16 umfasst mehrere Tragarme 17, die stromab des Aufnahmeförderers 4, beispielsweise im Bereich des Anschlussförderers 5 am Maschinenrahmen 3 angelenkt sind und von dort nach vorne über den Aufnahmeförderer 4 vorspringen bzw. sich seitlich hiervon erstrecken. Insbesondere können die Tragarme 17 seitlich rechts und links von der Förderhilfe 11 bzw. auch seitlich des Stachelrotors 7 angeordnet sein, sodass die Förderhilfe 11 zusammen mit den Tragarmen 17 eine näherungsweise U-förmige Struktur bilden, die sich über dem Stachelrotor 7 erstreckt und durch die Tragarme 17 stromab am Maschinenrahmen 3 angelenkt ist.

Am Maschinenrahmen 3 sind die beiden Tragarme 17 jeweils um eine liegende, sich quer zur Fahrtrichtung 6 erstreckende Schwenkachse 18 schwenkbar gelagert, sodass die Tragarme 17 auf- und niederwippen können. Die maschinenrahmenseitigen Lager der Tragarme 17 können dabei in Form einachsiger Schwenkgelenke ausgebildet sein, gegebenenfalls aber auch in Form von Kugelgelenken und/oder vereinfachten, mehrachsig verkippbaren Gelenken, die zusätzlich zu der Verschwenkung um die Achse 18 auch noch ein Verkippen um in einer Richtung quer hierzu zulassen.

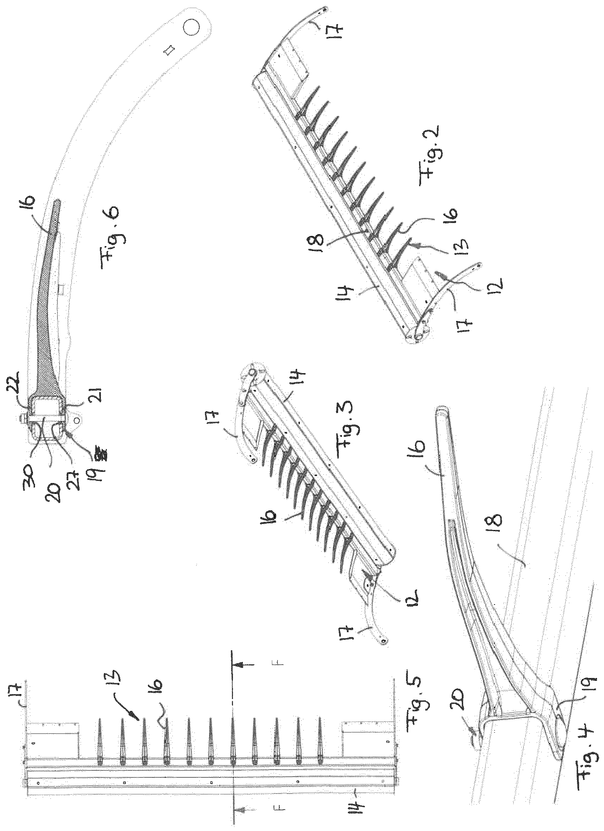

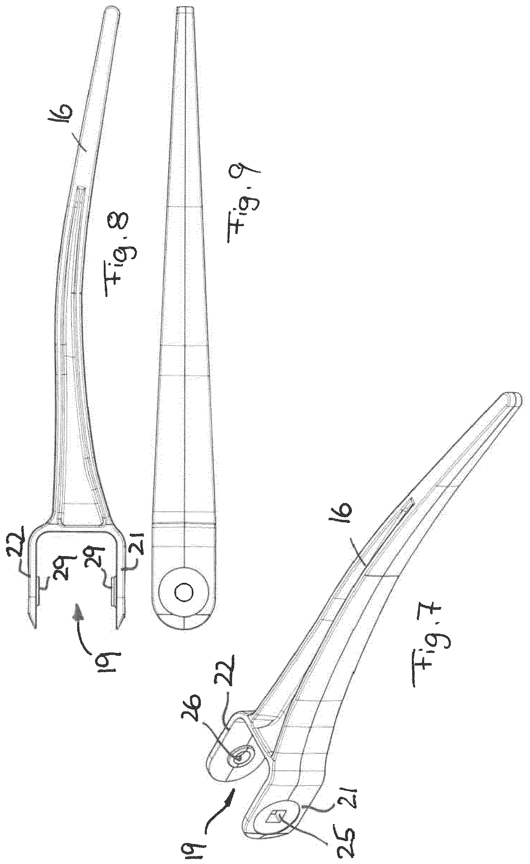

Wie die Figuren 2 bis 7 zeigen, sind die Zinken 16 des Stabgitters 13 der Prallfläche 12 mit ihren vorderen Enden an einem Zinkenträger 18 befestigt, der sich quer über die Pickup bzw. deren Stachelrotor 7 bzw. quer über den Fördergutstrom erstreckt, der über den Stachelrotor 7 läuft. Der genannte Zinkenträger 18 kann sich über die gesamte Breite der Prallfläche 12 erstrecken und mit seinen beiden Enden an dem genannten Drahtarmen 17 befestigt sein, mittels derer die Prallfläche 12 höhenbeweglich am Maschinenrahmen 3 aufgehängt ist.

Wie die Figuren 4, 6 und 7 zeigen, umgreifen die Zinken 16 den genannten Zinkenträger 18 und sind außenseitig am genannten Zinkenträger 18 festgespannt bzw. - gehalten.

Die Zinken 16 weisen hierfür jeweils ein Befestigungsmaul 19 auf, das stirnseitig bzw. an einem Ende des Zinkenkorpus angebracht ist und mit dem Zinken starr verbunden ist, wobei das genannte Befestigungsmaul 19 beispielsweise stirnseitig vom Ende des Zinkenkorpus vorspringend angebracht sein kann.

Dabei kann jeder Zinken 16 sein eigenes Befestigungsmaul 19 aufweisen, so dass die Zinken einzeln am Zinkenträger 18 befestigt sind, oder es können auch einige Zinken 16 zu einer Gruppe zusammengefaßt sein und ein gemeinsames Befestigungsmaul 19 besitzen, mit dem sie als Gruppe am Zinkenträger 18 befestigt werden können.

Das genannte Befestigungsmaul 19 kann integral einstückig, material- und/oder gefüge- bzw. strukturhomogen mit dem Zinkenkorpus verbunden sein. Beispielsweise können die Zinken 16 einschließlich ihrer Befestigungsmäuler 19 einteilig aus Kunststoff spritzgegossen sein.

Wie die Figuren 4 sowie 6 bis 8 zeigen, kann das genannte Befestigungsmaul 19 im Wesentlichen U-förmig konturiert sein und den Zinkenträger 18 von drei Seiten her umgreifen, wobei zwei gegenüberliegende Schenkel 21, 22 des Befestigungsmauls 19 auf gegenüberliegenden Flachseiten des Zinkenträgers 18 zu liegen kommen.

Das Befestigungsmaul 19 ist vorteilhafterweise mit seiner Querschnittskontur bzw. mit seiner Innenkontur an die Außenkontur des Zinkenträgers 18 angepasst, so dass das Befestigungsmaul 19 passgenau auf den Zinkenträger 18 aufgesteckt werden kann und dort formschlüssig festsitzt, insbesondere gegen Verdrehen gesichert ist.

Beispielsweise kann der Zinkenträger 18 ein Mehrkantprofil bilden, beispielsweise einen rechteckigen Rohrquerschnitt bilden, wobei in diesem Fall das Befestigungsmaul 19 den besagten U-förmigen Querschnitt mit zwei zueinander parallelen Seitenschenkeln 21, 22 aufweisen kann, vgl. Fig. 4 und Fig. 6.

Der Zinkenträger 18 kann aber auch als Formrohr mit anderen, vorzugsweise nichtkreisrunden Querschnitten ausgebildet sein.

Die gegenüberliegenden Schenkel 21, 22 des Befestigungsmauls 19 können durch ein Spannmittel 20 auf den Außenseiten des Zinkenträgers 18 festgespannt werden, wobei sich das Spannmittel 20 in seiner Längs- und/oder Wirkungsachse 23 quer zur Längsachse 24 der Zinken 16 und quer zur Längsachse des Zinkenträgers 18 erstreckt, vgl. Fig. 6.

Vorteilhafterweise weisen die Schenkel 21, 22 des Befestigungsmauls 19 Durchgangslöcher 25, 26 auf, die miteinander fluchten und auch mit einem Durchgangsloch 27 fluchten, das durch den Zinkenträger 18 hindurchgeht. Durch die fluchtenden Durchgangslöcher 25, 26, 27 kann das Spannmittel 20 hindurchgesteckt werden, wobei das genannte Spannmittel 20 ein Schraubbolzen sein kann, der sich einerseits mit einem Schraubbolzenkopf an einem Schenkel abstützt und mit einer aufgeschraubten Mutter andererseits am gegenüberliegenden Schenkel 22 verspannt werden kann, vgl. Fig. 6.

Wie die Fig. 6 bis 8 zeigen, kann das Befestigungsmaul 19 zusätzlich zu den Spannmitteln 20 auch noch durch eine Verrastung 28 am Zinkenträger 18 gehalten sein, insbesondere um die Montageposition zu sichern, bevor die Spannmittel 20 eingesetzt werden.

Die genannte Verrastung 28 kann dabei Rastvorsprünge 29 und Rastausnehmungen 30 umfassen, die am Befestigungsmaul 19 und am Zinkenträger 18 vorgesehen sind und miteinander in Eingriff geraten, wenn die Zinken 16 mit ihren Befestigungsmäulern 19 in die Montageposition auf den Zinkenträger 18 aufgesteckt sind.

Beispielsweise können als Rastvorsprünge 29 um die zuvor genannten Durchgangslöcher 25, 26 herum ringförmige Raststege vorgesehen sein, die von den Schenkeln 21, 22 des Befestigungsmauls 19 zur Innenseite hin vorspringen und in das Durchgangsloch 27 im Zinkenträger 18 einrasten können. Das genannte Durchgangsloch 27 im Zinkenträger 18 bildet in diesem Fall die Rastausnehmung 30 der Verrastung 28.

## Patentansprüche

1. Landwirtschaftliche Erntemaschine, insbesondere in Form eines Ladewagens oder einer Ballenpresse, mit einem Aufnahmeförderer (4) zum Aufnahmen von Erntegut vom Boden umfassend einen Stachelrotor (7), der umlaufend antreibbare Förderzinken (8) aufweist, einem Anschlussförderer (5), an den der Aufnahmeförderer (4) das vom Boden aufgenommene Erntegut übergibt, sowie einer über dem Stachelrotor (7) angeordneten Förderhilfe (11) zum Unterstützen der Erntegutübergabe von dem Stachelrotor (7) an den Anschlussförderer (4), wobei die genannte Förderhilfe (11) eine Prallfläche (12) umfasst, die ein Zinkengitter (13) mit einer Vielzahl von Zinken (16) aufweist, die an einem sich quer über den Erntegutförderstrom erstreckenden Zinkenträger (18) befestigt sind, von dem die Zinken (16) auskragen, **dadurch gekennzeichnet, dass** die Zinken (16) ein Befestigungsmaul (19) aufweisen, dass den Zinkenträger (18) zumindest auf drei Seiten umgreift und durch Spannmittel (20), die sich quer zur Zinkenlängsachse (24) erstrecken, auf dem Zinkenträger (18) festgeklemmt und/oder -gehalten ist.

2. Landwirtschaftliche Erntemaschine nach dem vorhergehenden Anspruch, wobei das Befestigungsmaul (19) gegenüberliegende Schenkel (21, 22) aufweist, die von den Spannmitteln (22) auf gegenüberliegende Umfangsseiten des Zinkenträgers (18) gespannt sind, so dass der Zinkenträger (18) zwischen den genannten Schenkeln (21, 22) eingeklemmt ist.

3. Landwirtschaftliche Erntemaschine nach einem der vorhergehenden Ansprüche, wobei sich die Spannmittel (20) durch den Zinkenträger (18) hindurch erstrecken und das Befestigungsmaul (19) ohne Überstand über eine Vorderseite des Zinkenträgers (18) hinaus auf dem Zinkenträger (18) sitzt, so dass die Vorderseite des Zinkenträgers (18) eine glatte, vorsprungsfreie Vorderseite der Prallfläche (12) bildet.

4. Landwirtschaftliche Erntemaschine nach einem der vorhergehenden Ansprüche, wobei das Befestigungsmaul (19) in gegenüberliegenden Schenkeln (21, 22) Durchgangslöcher (25, 26) aufweist, die mit einem Durchgangsloch (27) durch den Zinkenträger (18) hindurch fluchten, wobei sich das Spannmittel (20) durch die fluchtenden Durchgangslöcher (25, 26, 27) hindurch erstreckt, wobei vorzugsweise zumindest eines der Durchgangslöcher (24) eine Drehsicherungskontur bildet und/oder einen von der Kreisform abweichenden Querschnitt besitzt, wobei das Spannmittel (20) drehfest in dem genannten Durchgangsloch (25) sitzt.

5. Landwirtschaftliche Erntemaschine nach einem der vorhergehenden Ansprüche, wobei zwischen dem Befestigungsmaul (19) und dem Zinkenträger (18) eine formschlüssige Verrastung (28) zum Halten des Zinkens in einer Montageposition für das Spannmittel (20) auf dem Zinkenträger (18) vorgesehen ist.

6. Landwirtschaftliche Erntemaschine nach dem vorhergehenden Anspruch, wobei die Verrastung (28) zumindest einen Rastvorsprung (29) und zumindest eine Rastausnehmung (30) aufweist, die beim Aufstecken des Befestigungsmauls (19) auf den Zinkenträger (18) unter elastischer Aufweitung des Befestigungsmauls (19) in eine Eingriffsposition und/oder fluchtende Position bringbar sind, in der der Rastvorsprung (29) dann in die Rastausnehmung (30) einrastet, wobei vorzugsweise zwei Rastvorsprünge (29) in Form ringförmiger Raststege um die Durchgangslöcher (25, 26) in den gegenüberliegenden Schenkeln (21, 22) des Befestigungsmauls (19) vorgesehen und in das Durchgangsloch (27) im Zwischenträger (18) einrastbar sind.

7. Landwirtschaftliche Erntemaschine nach einem der vorhergehenden Ansprüche, wobei das Befestigungsmaul (19) eine zu einer Seite hin offene Gabel bildet und den Zinkenträger (18) auf nur drei Seiten umgibt.

8. Landwirtschaftliche Erntemaschine nach einem der vorhergehenden Ansprüche, wobei der Zinkenträger (18) umfangsseitig zwei gegenüberliegende Abflachungen aufweist, auf denen das Befestigungsmaul (19) mit zwei gegenüberliegenden Schenkeln (21, 22) flächig aufsitzt.

9. Landwirtschaftliche Erntemaschine nach einem der vorhergehenden Ansprüche, wobei der Zinkenträger (18) als Mehrkantprofil, insbesondere Vierkantprofil, ausgebildet ist und das Befestigungsmaul (19) mit seiner Innenumfangsseite eine an den Zinkenträger (18) formangepasste, rinnenförmige Mehrkantkontur, insbesondere rinnenförmige U-kontur, definiert.

10. Landwirtschaftliche Erntemaschine nach einem der vorhergehenden Ansprüche, wobei das Befestigungsmaul (19) integral einstückig, material- und gefügestrukturhomogen an den Zinken (16) angeformt ist.

11. Landwirtschaftliche Erntemaschine nach einem der vorhergehenden Ansprüche, wobei die Zinken (16) einschließlich ihrer Befestigungsmäuler (19) aus Kunststoff bestehen, insbesondere aus Kunststoff spritzgegossen sind.

12. Landwirtschaftliche Erntemaschine nach einem der vorhergehenden Ansprüche, wobei die Zinken (16) eine sich über die Länge ändernde, zur auskragenden Zinkenspitze hin verjüngende Querschnittskontur besitzen, wobei sich die Zinken (16) insbesondere vom Befestigungsmaul (19) ausgehend zur auskragenden Zinkenspitze hin kontinuierlich in ihrer Höhe und/oder kontinuierlich in ihrer Breite verjüngen.

13. Landwirtschaftliche Erntemaschine nach dem vorhergehenden Anspruch, wobei verschiedene Längsabschnitte der Zinken (16) unterschiedliche Querschnittsformen besitzen, wobei ein näher zum Befestigungsmaul (19) hin angeordneter Zinkenabschnitt eine T-förmige oder Doppel-T-förmige Querschnittskontur und ein näher zur auskragenden Zinkenspitze hin angeordneter Zinkenabschnitt eine mehrkantförmige und/oder abgerundete Vollquerschnittskontur besitzt.

14. Landwirtschaftliche Erntemaschine nach einem der vorhergehenden Ansprüche, wobei die Förderhilfe (11) eine Schwadrolle oder Einlaufwalze (14) umfasst, die bezogen auf die Erntegutförderrichtung stromauf der Prallfläche (12) und/oder im Einlaufbereich der Prallfläche (12) angeordnet ist, wobei ein Spaltbereich zwischen der Einlaufwalze (14) und der Prallfläche (12) von den Befestigungsmäulern (19) der Zinken (16) ausgespart ist.

15. Landwirtschaftliche Erntemaschine nach einem der vorhergehenden Ansprüche, wobei die Förderhilfe (11) einschließlich der Prallfläche (12) relativ zum Stachelrotor (7) höhenbeweglich am Maschinenrahmen (3) aufgehängt ist.
